# EUROPÄISCHE PATENTSCHRIFT

(11) **EP 1 179 570 B1**
(45) Veröffentlichungstag und Bekanntmachung des Hinweises auf die Patenterteilung: **15.03.2006**
(21) Anmeldenummer: 01118505.5
(22) Anmeldetag: 01.08.2001
(51) Int. Cl.: C08L 95/00, C08K 5/20, B01F 17/00, C10C 3/02

(54) **Verfahren zur Einstellung der Bruchgeschwindigkeit von Bitumenemulsionen**
Process for adjusting the rate of breaking of bitumen emulsions
Procédé d'adaptation du taux de rupture des émulsions bitumineuses

(30) Priorität: 10.08.2000 DE 10039029
(43) Veröffentlichungstag der Anmeldung: 13.02.2002
(73) Patentinhaber: Cognis IP Management GmbH, 40589 Düsseldorf (DE)
(72) Erfinder: Bigorra Llosas, Joaquin, Dr., 08203 Sabadell (ES); Escoda, Maria, 08960 St. Just Desvern/Barcelona (ES); Pi Subirana, Rafael, Dr., 08400 Granollers (ES)

(56) Entgegenhaltungen:
- DD-A- 291 330
- US-A- 3 855 235
- US-A- 4 464 286
- US-A- 5 352 285
- US-A- 5 443 632

## Beschreibung

### Gebiet der Erfindung

Die Erfindung befindet sich auf dem Gebiet der Bitumenemulsionen und betrifft ein neues Verfahren zur Einstellung der Bruchgeschwindigkeit sowie die Verwendung spezieller kationischer Tenside als Emulgatoren zur Herstellung von Bitumenemulsionen mit definierter Bruchgeschwindigkeit.

### Stand der Technik

Bitumen stellt ein bei der schonenden Aufarbeitung von Erdöl gewonnenes dunkelfarbiges, halbfestes bis springhartes, schmelzbares, hochmolekulares Kohlenwasserstoffgemisch dar. Üblicherweise handelt es sich um kolloide Systeme, speziell Sole, die in einer öligen Grundmasse (Maltene) dunkle, harz- oder kohlenartige Teilchen mit molaren Massen im Bereich etwa 300 bis 3000 enthalten, welche als Asphaltene bezeichnet werden. Wässrige Bitumenemulsionen werden überwiegend im Straßenbau eingesetzt. Als Emulgatoren haben sich für diesen Zweck Diamine, beispielsweise N-Stearylpropylendiamin, oder Fettsäureamidoamine, wie z.B. Talgfettsäureamidopropylamin als geeignet erwiesen. Bei der Herstellung von Bitumenemulsionen lassen sich grundsätzlich zwei unterschiedliche Verfahrensformen unterscheiden: Soll der Bitumen vor Ort direkt verarbeitet werden, ist man daran interessiert, dass die offene Zeit, d.h. die Zeit bis zum Abbinden möglichst kurz ist. In der Praxis bedeutet dies, dass die Bitumenemulsion beim Kontakt mit den Füllstoffen möglichst rasch brechen soll; man spricht in diesem Zusammenhang auch von einer hohen Bruchgeschwindigkeit.

Im zweiten Fall erfolgt die Herstellung der Bitumenemulsion im Werk, so dass man umgekehrt gerade an einer großen offenen Zeit interessiert ist, damit der Bitumen nicht während des Transportes abbindet. Hier wird also eine möglichst niedrige Bruchgeschwindigkeit gewünscht. Zur Charakterisierung der Bruchgeschwindigkeit einer Bitumenemulsion hat sich ein einfaches Testverfahren etabliert: Hierzu werden 100 g einer Bitumenemulsion unter starker Scherung solange Füllstoffe zugesetzt, bis es zum Bruch der Emulsion, d.h. zur Abscheidung des Wassers kommt. Der Bruchindex berechnet sich dann aus dem Gewichtsverhältnis von zugesetztem Füllstoff zu Emulsion multipliziert mit dem Faktor 100. Je höher der Füllstoffanteil ist, um so "langsamer" ist die Emulsion, d.h. umso niedriger ist die Bruchgeschwindigkeit.

In der Praxis werden Emulgatoren gewünscht, die eine maßgeschneiderte Einstellung der Bruchgeschwindigkeit erlauben, so dass die Emulsionen dem jeweiligen Zweck angepasst werden können. Die Aufgabe der vorliegenden Erfindung hat folglich darin bestanden, bestehende Verfahren in dieser Richtung zu verbessern.

### Beschreibung der Erfindung

Gegenstand der Erfindung ist ein Verfahren zur Einstellung der Bruchgeschwindigkeit von Bitumenemulsionen, bei dem man den Zubereitungen als Emulgatoren C₁-C₄₋alkylquaternierte Fettsäureamidoamine in Form der Halogenide oder Alkylsulfate unterschiedlichen Quatemierungsgrades zusetzt. Ein weiterer Gegenstand der Erfindung betrifft die Verwendung von C₁-C₄-alkylquaternierten Fettsäureamidoaminen in Form der Halogenide oder Alkylsulfate unterschiedlichen Quatemierungsgrades als Emulgatoren zur Herstellung von Bitumenemulsionen.

Überraschenderweise wurde gefunden, dass sich die Bruchgeschwindigkeit in Abhängigkeit des Quatemierungsgrades der Fettsäureamidoamine zwischen sehr rasch und extrem langsam beliebig einstellen lässt.

### Ouaternierte Fettsäureamidoamine

Als Emulgatoren werden vorzugsweise Quatenierungsprodukte von Fettsäureamidoaminen eingesetzt, die der Formel (I) folgen,

**R**^{**1**}**CO-NH-[(CH**_{**2**}**)**_{**n**}**NR**^{**2**}**]**_{**m**}**R**^{**3**} (I)

in der in der R¹CO für einen linearen oder verzweigten, gesättigten oder ungesättigten Acylrest, R² und R³ unabhängig voneinander für Wasserstoff oder einen Alkylrest mit 1 bis 3 Kohlenstoffatomen, n für Zahlen von 1 bis 10 und m für Zahlen von 1 bis 5 steht. Die Ausgangsstoffe, also die Fettsäureamidoamine, stellen bekannte Fettstoffe dar, die nach den einschlägigen Verfahren der organischen Chemie erhalten werden können. Typische Beispiele sind Fettsäureamidoamine, deren Fettsäurekomponente sich von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen ableiten. Für die Kondensation mit den Fettsäuren kommen beispielsweise Diethylentriamin, Triethylentriamin und Tetraethylenpentamin sowie deren Gemische in Frage. Vorzugsweise setzt man Fettsäureamidoamine der Formel (I) ein, in der R¹CO für den Acylrest der Kokosfettsäure, der Talgfettsäure sowie der teilgehärteten Talgfettsäure, R² und R³ für Wasserstoff, sowie n und m für 1,2 oder 3 steht. Die Herstellung der Amidoamine kann durch direkte Kondensation der Polyamine mit den Fettsäuren oder durch Transamidierung unter Einsatz von Fettsäuremethylestern oder Triglyceriden erfolgen.

Zur Einführung kationischer Zentren werden die Fettsäureamidoaminen mit geeigneten Quatemierungsmitteln, wie beispielsweise kurzkettigen Alkylhalogeniden oder Dialkylsulfaten umgesetzt, wobei die Reaktion ausschließlich an den Stickstoffatomen abläuft, die nicht amidisch gebunden sind. Die bevorzugten Emulgatoren sind C₁-C₄-alkylquaternierte Fettsäureamidoamine, speziell solche, in Form der Halogenide oder Alkylsulfate vorliegen. Besonders bevorzugt sind methylquaternierte Fettsäureamidoamine in Form der Chloride oder Methosulfate, also Umsetzungsprodukte der Fettsäureamidoamine mit Methylchlorid oder Dimethylsulfat. Entsprechende Reaktionen sind dem Fachmann aus dem Stand der Technik hinlänglich vertraut. Der Quatemierungsgrad Q der quaternierten Fettsäureamidoamine kann im Bereich von 5 bis 95 % der Theorie liegen; vorzugsweise beträgt er zwischen 10 und 50 %. Damit ist umgekehrt sofort klar, dass das Wesen der vorliegenden Erfindung darin besteht, definierte Mischungen von quaternierten und nicht-quaternierten Fettsäureamidoaminen zum Einsatz zu bringen, wobei das Verhältnis durch den Grad der Quaternierung bestimmt wird. Es ist jedoch auch möglich, vollständig oder praktisch vollständig quaternierte Produkte mit den nicht-quaternierten Ausgangsstoffen abzumischen, was dann sinnvoll ist, wenn man Produkte mit unterschiedlichen Acylresten zum Einsatz bringen will. In diesem Fall können die nichtquaternierten Ausgangsstoffe dann als Co-Emulgatoren wirken.

### Kationpolymere

In einer bevorzugten Ausführungsform der Erfindung können die quaternierten Fettsäureamidoamine gemeinsam mit Kationpolymeren eingesetzt werden. Geeignete Kationpolymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von. Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium hydroxy propyl hydrolyzed collagen (Lamequat®L/Grünau), quaternierte Weizenpolypeptide, Polyethylenimin, kationische Siliconpolymere, wie z.B. Amidomethicone, Copolymere der Adipinsäure und Dimethylaminohydroxypropyldiethylentriamin (Cartaretine®/Sandoz), Copolymere der Acrylsäure mit Dimethyldiallylammo-niumchlorid (Merquat® 550/ Chemviron), Cholinaten, Polyaminopolyamide, wie z.B. beschrieben in der **FR 2252840 A** sowie deren vemetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol. Ferner können auch Polymere auf Basis von Adipinsäure und Diethylentriamin eingesetzt werden, welche mit Dimethylsulfat, Methylchlorid oder Benzylchlorid quaterniert und unter der Bezeichnung Fibrabon® im Handel erhältlich sind. Vorzugsweise setzt man Kationpolymere ein, die als Monomer oder Co-Monomer Acrylsäure und/oder Methacrylsäure oder deren Amide enthalten. Im Sinne der Erfindung ist es möglich, die quaternierten Fettsäureamidoamine und die Kationpolymere - jeweils bezogen auf den Feststoffgehalt - im Gewichtsverhältnis 99,9 : 0,1 bis 50 : 50, vorzugsweise 95 : 5 bis 65 : 35 und insbesondere 90 : 10 bis 75 : 25 einzusetzen.

### Gewerbliche Anwendbarkeit

In der Regel werden die Emulgatoren in Mengen von 0,1 bis 5 und vorzugsweise 0,15 bis 1 Gew.-% - bezogen auf die Bitumenemulsionen - eingesetzt. Werden Co-Emulgatoren mitverwendet, können diese bereits der Bitumenmasse zugesetzt worden sein oder zusammen mit den Emulgatoren verwendet werden. Des Weiteren ist es auch möglich, die neuen Emulgatoren in geringen Mengen zur Modifikation der Bitumenmasse zu verwenden und durch Zusatz anderer Emulgatoren die Emulsion herzustellen.

Zur Herstellung der Emulsionen legt man vorzugsweise die wässrige Emulgatorlösung und den Bitumen aus separaten Tanks in einer Mischapparatur vor, in der die Homogenisierung unter starker Scherung erfolgt. Für diesen Zweck eignen sich beispielsweise ein Ultra-Turrax oder eine Kolloidmühle. Die Emulgatoren werden üblicherweise auf 50 bis 70 °C temperiert, während der Bitumen aus Gründen der Verarbeitbar- und Pumpbarkeit Temperaturen oberhalb von 120 und vorzugsweise von 140 bis 150 °C aufweist. Die resultierende Emulsion weist in der Regel eine Mischtemperatur im Bereich von 60 bis 90 °C auf.

### Beispiele

Zur Herstellung der wässrigen Emulgatorphase wurden Fettsäureamidoamine mit unterschiedlichen Quatemierungsgraden gegebenenfalls in Abmischung mit nicht quaternierten Fettsäureamidoaminen bei etwa 45 °C in einer Wasserphase dispergiert, die durch Zugabe von Salzsäure auf einen pH-Wert von 2,5 bis 3 eingestellt wurde. Die Herstellung der Bitumenemulsionen erfolgte dann in einer Pilotanlage der Firma Atomix. Hierzu wurden die wässrigen Emulgatoren (56 °C) und der Bitumen (140 °C) in zwei verschiedenen Tanken vorgelegt und unter starker Scherung (9.000 Upm) mit Hilfe einer Kolloidmühle kontinuierlich vermischt (Temperatur der Mischung: 75 °C). Die Ergebnisse sind in Tabelle 1 zusammengefasst.

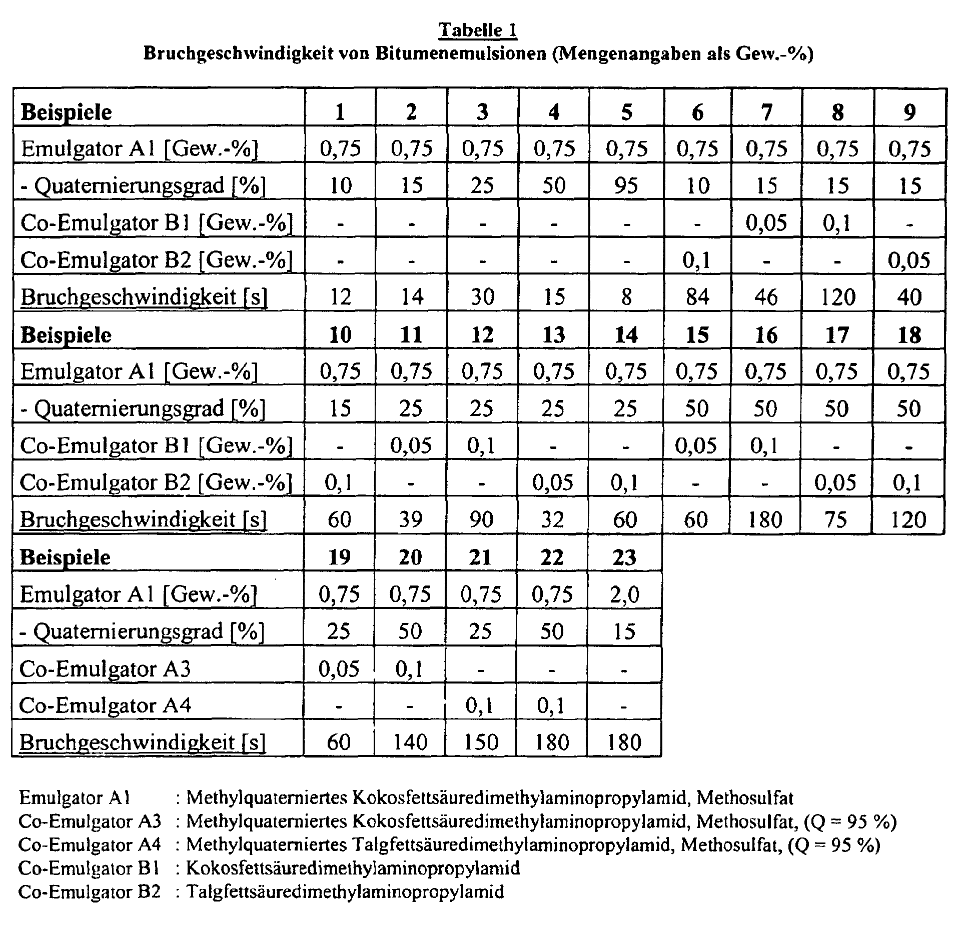

## Patentansprüche

1. Verfahren zur Einstellung der Bruchgeschwindigkeit von Bitumenemulsionen, **dadurch gekennzeichnet, dass** man den Zubereitungen als Emulgatoren C₁-C₄-alkylquaternierte Fettsäureamidoamine in Form der Halogenide oder Alkylsulfate unterschiedlichen Quatemierungsgrades zusetzt.

2. Verfahren nach Anspruch 1, **dadurch gekennzeichnet, dass** man Quatenierungsprodukte von Fettsäureamidoaminen einsetzt, die der Formel (I) folgen,
**R**^{**1**}**CO-NH-[(CH**_{**2**}**)**_{**n**}**NR**^{**2**}**]**_{**m**}**R**^{**3**} (I)
in der in der R¹CO für einen linearen oder verzweigten, gesättigten oder ungesättigten Acylrest, R² und R³ unabhängig voneinander für Wasserstoff oder einen Alkylrest mit 1 bis 3 Kohlenstoffatomen, n für Zahlen von 1 bis 10 und m für Zahlen von 1 bis 5 steht.

3. Verfahren nach den Ansprüchen 1 und/oder 2, **dadurch gekennzeichnet, dass** man methylquaternierte Fettsäureamidoamine in Form der Chloride oder Methosulfate einsetzt.

4. Verfahren nach mindestens einem der Ansprüche 1 bis 3, **dadurch gekennzeichnet, dass** man quaternierte Fettsäureamidoamine mit einem Quaternierungsgrad im Bereich von 5 bis 95 % der Theorie einsetzt.

5. Verfahren nach mindestens einem der Ansprüche 1 bis 4, **dadurch gekennzeichnet, dass** man die quaternierten Fettsäureamidoamine in Mengen von 0,1 bis 5 Gew.-% - bezogen auf die Bitumenemulsionen - einsetzt.

6. Verfahren nach mindestens einem der Ansprüche 1 bis 5, **dadurch gekennzeichnet**, das man die quaternierten Fettsäureamidoamine zusammen mit Kationpolymeren einsetzt.

7. Verfahren nach Anspruch 6, **dadurch gekennzeichnet, dass** man die quaternierten Fettsäureamidoamine und die Kationpolymere im Gewichtsverhältnis 99,9 : 0,1 bis 50 : 50 einsetzt.

8. Verwendung von C₁-C₄-alkylquaternierten Fettsäureamidoaminen in Form der Halogenide oder Alkylsulfate unterschiedlichen Quatemierungsgrades als Emulgatoren zur Herstellung von Bitumenemulsionen.

## Claims

1. Process for adjusting the breaking rate of bitumen emulsions, **characterized in that** C₁₋₄-alkyl-quaternized fatty acid amidoamines in the form of the halides or alkyl sulfates differing in their degree of quaternization are added as emulsifiers to the preparations.

2. Process as claimed in claim 1, **characterized in that** quaternization products of fatty acid amidoamines corresponding to formula (I):
**R**^{**1**}**CO-NH-[(CH**_{**2**}**)**_{**n**}**NR**^{**2**}**]**_{**m**}**R**^{**3**} **(I)**
in which R¹CO is a linear or branched, saturated or unsaturated acyl group, R² and R³ independently of one another represent hydrogen or a C₁₋₃ alkyl group, n is a number of 1 to 10 and m is a number of 1 to 5, are used.

3. Process as claimed in claims 1 and/or 2, **characterized in that** methyl-quaternized fatty acid amidoamines in the form of the chlorides or methosulfates are used.

4. Process as claimed in at least one of claims 1 to 3, **characterized in that** quaternized fatty acid amidoamines with a degree of quaternization of 5 to 95% of the theoretical are used.

5. Process as claimed in at least one of claims 1 to 4, **characterized in that** the quaternized fatty acid amidoamines are used in quantities of 0.1 to 5% by weight, based on the bitumen emulsions.

6. Process as claimed in at least one of claims 1 to 5, **characterized in that** the quaternized fatty acid amidoamines are used together with cationic polymers.

7. Process as claimed in claim 6, **characterized in that** the quaternized fatty acid amidoamines and the cationic polymers are used in a ratio by weight of 99.9:0.1 to 50:50.

8. Use of C₁₋₄-alkyl-quaternized fatty acid amidoamines in the form of the halides or alkyl sulfates differing in their degree of quaternization as emulsifiers for the production of bitumen emulsions.

## Revendications

1. Procédé de réglage de la vitesse de rupture d'émulsions de bitume,
**caractérisé en ce qu'**
on ajoute aux préparations en tant qu'émulsifiants des amidoamines d'acides gras quaternisées avec des alkyles en C₁ à C₄ sous la forme d'halogénures ou d'alkhylsulfates de divers degrés de quaternisation.

2. Procédé selon la revendication 1,
**caractérisé en ce qu'**
on utilise des produits de quaternisation d'amidoamines d'acides gras qui répondent à la formule (I)
R¹CO-NH-[(CH₂)ₙNR²]ₘR³ (I)
dans laquelle R¹CO représente un radical acyle linéaire ou ramifié, saturé ou insaturé, R² et R³ représentent indépendamment l'un de l'autre un hydrogène ou un radical alkyle comportant de 1 à 3 atomes de carbone, n représente des nombres allant de 1 à 10 et m représente des nombres allant de 1 à 5.

3. Procédé selon les revendications 1 et/ou 2,
**caractérisé en ce qu'**
on utilise des amidoamines quaternisées avec des groupes méthyle sous la forme de chlorures ou de méthosulfates.

4. Procédé selon au moins une des revendications 1 à 3,
**caractérisé en ce qu'**
on utilise des amidoamines d'acides gras quaternisées ayant un degré de quaternisation situé dans un intervalle allant de 5 à 95 % de la valeur théorique.

5. Procédé selon au moins une des revendications 1 à 4,
**caractérisé en ce qu'**
on utilise les amidoamines d'acides gras quaternisées en quantités de 0,1 à 5 % en poids - par rapport aux émulsions de bitume.

6. Procédé selon au moins une des revendications 1 à 5,
**caractérisé en ce que**
on utilise les amidoamines d'acides gras quaternisées avec des polymères cationiques.

7. Procédé selon la revendication 6,
**caractérisé en ce qu'**
on utilise les amidoamines d'acides gras quaternisées et les polymères cationiques dans un rapport pondéral de 99,9 : 0,1 à 50 : 50.

8. Utilisation d'amidoamines d'acides gras quaternisées avec des alkyles en C₁ à C₄ sous la forme d'halogénures ou d'alkyl sulfates de divers degrés de quaternisation, comme émulsifiants pour la préparation de bitume.
